# EUROPÄISCHE PATENTSCHRIFT

(11) **EP 1 417 875 B1**
(45) Veröffentlichungstag und Bekanntmachung des Hinweises auf die Patenterteilung: **21.01.2009**
(21) Anmeldenummer: 03022334.1
(22) Anmeldetag: 04.10.2003
(51) Int. Cl.: A01B 63/00

(54) **Frei konfigurierbare, externe Aussentaster für landwirtschaftliche und kommunale Nutzfahrzeuge und deren Anbaugeräte**
Freely configurable external switch for agricultural and communal utility vehicles and their implements
Commutateur configurable librement pour véhicules agricoles et communaux et leurs accessoires

(30) Priorität: 25.10.2002 DE 10249757
(43) Veröffentlichungstag der Anmeldung: 12.05.2004
(73) Patentinhaber: CNH Österreich GmbH, 4300 St. Valentin (AT)
(72) Erfinder: Hrazdera, Oliver, Dipl.-Ing., 4501 Neuhofen an der Krems (AT); Fichtinger, Jürgen, Ing., 3362 Mauer (AT)
(74) Vertreter: Feldkamp, Rainer

(56) Entgegenhaltungen:
- EP-A- 1 169 902
- EP-A- 1 316 868
- EP-A- 1 338 934
- CA-A- 2 141 092
- US-A- 5 915 313
- US-A1- 2001 016 794

## Beschreibung

Die Erfindung betrifft einen externen Außentaster für landwirtschaftliche und kommunale Nutzfahrzeuge und/oder Anbaugeräte, der elektrisch mit mindestens einer Steuereinheit verbunden ist und der der externen Steuerung von wenigstens eines Betriebszustandes und/oder einer Betriebsfunktion eines Steuergerätes dient.

Derartige Außentaster sind elektrische Tastschalter, die bei ihrer Betätigung einen elektrischen Stromkreis schließen oder öffnen und damit eine Betätigung von Steuergeräten ermöglichen.

Durch die ständige technische Weiterentwicklung von landwirtschaftlichen, kommunalen und Nutzfahrzeugen und durch die Erhöhung der Funktionsvielfalt von Anbaugeräten unterliegen die Fahrzeugführer einer enormen Verantwortung bezüglich der Bedienung der Gerätetechnik, der Gerätesicherheit und des technischen Anlagenbetriebes. In zunehmendem Maße werden in landwirtschaftlichen Fahrzeugen, insbesondere bei Traktoren, neben den kabinengesteuerten Terminals auch externe Hydraulikhubelemente und Außentaster eingesetzt, um einerseits am Fahrzeug oder Anbaugerät befindliche Steuergeräte gefahrlos zu Justieren und in ihrer Funktionswelse zu optimieren und andererseits ein Bedienen der Steuergeräte ohne Hilfskraft gefahrlos realisieren zu können.

Diesen externen Außentastern sind vordefinierte Betriebsfunktionen der Steuergeräte, wie z.B. für die Bedienung der Zapfwellen vorn und hinten, für das Heben und das Senken des Heck- und Fronthubwerks oder der partiellen Bedienung von Anbaugeräten, zugeordnet. Die Umsetzung der Schaltfunktionen wird hierbei mittels Aktuatoren realisiert, die die hydraulischen Leistungen zu den Anbaugeräten schalten. Die Funktionsbelegung erfolgt werkseitig in Anlehnung an typische Bedienungs- und Anwendungsstrategien des Bedienpersonals und repräsentiert damit den Stand der Technik. Dieser Umstand führt dazu, dass einerseits vorbelegte Außentaster selten oder nicht genutzt werden und andererseits gewünschte, spezielle Betriebsfunktionen mittels dieser externen Außentaster nicht realisierbar sind. Ferner war es in der Vergangenheit nicht möglich, die Anbaugeräte mittels Außentaster direkt anzusteuern, sondern die Steueraufgabe konnte nur unter Einbeziehung von Aktuatoren umgesetzt werden.

Der Begriff "Steuergeräte" bezieht sich nachfolgend auf die Zapfwellen, Hubwerke, Antriebe, Differenzialsperre, Anbaugeräte und andere ansteuerbare Komponenten oder Funktionsteile von landwirtschaftlichen und kommunalen Nutzfahrzeugen.

Bekannt aus der DE 44 28 824 A1 ist, dass ausgewählte Steuergeräte eines Arbeitsfahrzeuges, einem vorgebbaren Programm folgend, durch ein Bedienungselement extern angesteuert werden können. Mit der Aktivierung des Automatik-Modus wird hierbei eine Sequenz von programmierten Arbeitsschritten ausgewählter Steuerelemente durch Betätigung des Bedienungselements ausgelöst. Der Vorteil besteht zweifelsohne in der Automatisierung von sich ständig wiederholenden, gleichförmigen Arbeitsschritten.

Jedoch konnte das Bedürfnis, neutrale Außentaster individuell konfigurieren zu können, um einzeln und programmunabhängig gerätespezifische Betriebsfunktionen extern realisieren zu können, damit allerdings nicht gestillt werden. Vor dem Hintergrund, dass im Verlauf des Pflanzenwachstums viele verschiedene Anbaugeräte zur Feldbearbeitung erforderlich sind, scheint die Notwendigkeit der individuellen Konfiguration der Außentaster von landwirtschaftlichen Nutzfahrzeugen praxisnah gegeben.

Eine große Anzahl von anbaugerätespezifischen Betriebsfunktionen, wie z.B. das Auffalten des Mähwerks, die Spurweitenverstellung beim Pflug oder die Einstellung der Kratzbodengeschwindigkeit des Ladewagens, lassen sich nur ausschließlich über das Terminal der Fahrerkabine steuern. Eine kontinuierliche und effiziente Abfolge von Arbeitsschritten kann durch das ständige Wechseln des Bedienpersonals zwischen dem Arbeitsgerät, welches sich am hinteren oder vorderen Teil des Traktors befindet, und der Steuereinheit und der Bedieneinheit, die sich in der Fahrerkabine befinden, nicht erreicht werden. Bekannte Arbeitsschritte beim Einsatz einer Holzhackmaschine lassen sich nur operativ und einzeln am Anbaugerät realisieren und bedürfen der ständigen Aufsicht vom Bedienpersonal.

Aus der CA-A-2 141 092 ist eine Steuereinheit für eine Maschine bekannt, die mit einem Bedienfeld und mit zu steuernden Teilen der Maschine über einen Kommunikationsbus verbunden ist. Das Bedienfeld weist Tastschalter zur Einstellung der Funktionen der Steuereinheit und der Betriebsweise der einzelnen Maschinenteile auf.

Aus der US-A-5 915 313 ist eine Landmaschine mit einem Anbaugerät in Form eines pneumatischen Sägerätes bekannt, das über die Steuereinheit der Landmaschine steuerbar ist, jedoch über eine eigene Steuereinheit verfügt, die mit einem Außentaster versehen ist, der ausschließlich zur Kalibrierung des Sägerätes dient. Andere Funktionen der Gesamtkombination aus Landmaschine und Anbaugerät können mit diesem Außentaster nicht gesteuert werden.

Es besteht daher beim Bedienpersonal seit längerer Zeit das Bedürfnis, werkseitig vorbelegte Außentaster operativ und individuell, im Rahmen des vom Fahrzeughersteller vorgegebenen Funktionsrepertoire nachträglich gerätespezifisch konfigurieren zu können.

Aufgabe der Erfindung ist es, externe Außentaster frei und flexibel konfigurieren zu können und die Anzahl nicht oder selten genutzter externer Außentaster zu optimieren, um damit die Bedienung zu vereinfachen und die Leistungsfähigkeit, Betriebssicherheit und Produktivität von landwirtschaftlichen Nutzfahrzeugen zu erhöhen. Ferner soll durch die Möglichkeit der variablen Konfiguration gleichartiger Bedienelemente die Ersatzteilvorhaltung beim Hersteller und Betreiber optimiert und damit eine Kostenreduktion vollzogen werden.

Diese Aufgabe wird erfindungsgemäß durch die Merkmale des Anspruchs 1 gelöst; die Unteransprüche zeigen weitere vorteilhafte Ausgestaltungen der Erfindung.

Nach der Konzeption der Erfindung werden vom Fahrzeughersteller die externen, am Fahrzeug oder Anbaugerät befindlichen Außentaster funktionsneutral ausgeführt, die mindestens mit einer Steuereinheit und einer Bedieneinheit über eine mehradrige Sammelleitung, nachfolgend BUS genannt, kommunizieren. Für den Daten- und Informationsaustausch zwischen den verschiedenen Funktionseinheiten einer Datenverarbeitungsanlage werden innerhalb eines Fahrzeugs der CAN-BUS und zwischen Fahrzeug und Anbaugerät der ISOBUS verwendet.

Die individuelle und nachträgliche Konfiguration und Auswahl der externen Außentaster erfolgt erfindungsgemäß einerseits im Rahmen des vom Fahrzeughersteller angebotenen Funktionsrepertoire und andererseits in Abhängigkeit der verfügbaren Steuergeräte am Nutzfahrzeug und/oder'der Anbaugeräte.

Eine vorteilhafte Ausführung der Erfindung besteht darin, dass die individuelle Konfiguration und Belegung der Außentaster für verschiedene Anbaugeräte mittels eines Displays auf einem korrespondierenden Speichermedium abgespeichert werden kann und im Bedarfsfall wieder geladen werden kann. Insbesondere bei dem bereits erwähnten häufigen Wechseln der Anbaugeräte über dem Verlauf der Wachstumsperiode von Zuchtpflanzen wird menügeführt die anbaugerätespezifische Konfiguration der Außentaster reaktiviert. Eine Betätigung des Außentasters aktiviert dabei entweder Aktuatoren, die sich am Ende der Steuerkette befinden, oder löst eine Signalweiterleitung über den fahrzeuginternen CAN-BUS zu weiteren Steuereinheiten aus. Bei der Nutzung von Anbaugeräten wird die Signalweiterleitung über einen ISOBUS, ohne vorherige Aktivierung bzw. Umgehung der Aktuatoren, realisiert. Der Vorteil besteht darin, dass eine externe Bedienung der Steuergeräte von Anbaugeräten auch mittels der am Traktor angeordneten Außentaster realisiert wird. Erfindungsgemäß wird der ISOBUS nicht nur zur Signalweiterleitung der über das Terminal der Fahrerkabine des Traktors ausgelösten Signale genutzt, sondern vielmehr auch zur Weiterleitung von Informationen über Schaltzustände der frei konfigurierbaren Außentaster.

Mit der Übertragung der Information des Schaltzustandes der Außentaster werden die entsprechenden Betriebsfunktionen der Steuergeräte ausgelöst. Der Begriff "Betriebsfunktionen" repräsentiert dabei die Gesamtheit aller bestimmungsgemäßen Verstellmöglichkeiten der Steuergeräte.

Die externe Ansteuerung der Steuergeräte mit Hilfe der externen Außentaster ist aus sicherheitsrelevanten Gründen nur unterhalb einer Grenzgeschwindigkeit von ca. einem km/h bzw. einer Grenzgeschwindigkeit möglich, bei der keine Gefahr für den Anwender besteht. Darüber hinaus können auch noch andere geeignete Führungsgrößen zur Steuerung Verwendung finden.

Die Konfiguration aller am Fahrzeug und Anbaugerät verfügbaren externen Außentaster erfolgt menügeführt über eine fahrzeuginterne Eingabeeinheit, vorzugsweise über ein Display. Diese Eingabeeinheit ist mit der Zentralsteuereinheit des Fahrzeugs über einen CAN-BUS verbunden. Erfindungsgemäß verfügt die Zentralsteuereinheit über eine Applikationssoftware, die fahrzeugneutral in die Zentralsteuereinheit implementiert wird. Bei Verwendung externer Eingabeeinheiten, z.B. Diagnosedisplay, erfolgt die Informationsübertragung zur Zentralsteuereinheit über entsprechende Schnittstellen.

Zur Sicherstellung einer gefahrlosen Betriebsführung wird vor Beginn der Arbeiten ein Check-up aller konfigurierten externen Außentaster durchgeführt.

Erfindungsgemäß können allen externen Außentastern über das Display frei wählbare Funktionen zugewiesen werden, die denen äquivalent sind, die über die Steuerung in der Fahrerkabine realisiert werden können. Zweckmäßigerweise und aus Gründen der Anlagensicherheit erfolgt die zulässige Konfiguration unter Berücksichtigung der Funktionen des Anbaugerätes und der Anordnung der Außentaster am Traktor. In einer bevorzugten Ausführungsform sind deshalb mit den heckseitig angeordneten Außentastem nur Steuergeräte bedienbar, die sich am Heck des Traktors befinden. Äquivalent sind am Frontbereich angeordnete Außentaster nur für die Bedienung von Steuergeräten zugelassen, die sich am Frontende des Traktors befinden. Die Auswirkungen der Funktionsverstellung sind damit unabdingbar zur Einhaltung von Sicherheitsmaßnahmen in Sichtweite des Bedienpersonals organisiert.

Die externen Außentaster sind vorzugsweise als Taster ausgeführt, um durch ein "Antippen" eine Feinjustierung, z.B. bei der Spurweitenverstellung des Pfluges, vornehmen zu können. Während des Bedienvorgangs der Außentaster bleiben weiterhin alle Grenzwertgeber oder Sensoren aktiviert, um ein Überschreiten der Funktionsgrenzen bei menschlichem Versagen zu verhindern.

Vorteilhafterweise kann herstellerseitig die Anzahl der externen Außentaster bei freier Konfiguration gegenüber einer Vorkonfiguration verringert werden. Durch die variable Konfiguration völlig gleichartiger Bedienelemente und die Tatsache, dass immer nur ein begrenzter Funktionsteil für definierte Aufgaben erforderlich ist, können gegebenenfalls auch die Modellvariationen eines Traktortyps herstellerseitig optimiert werden.

Gemäß einer bevorzugten Ausgestaltung der Erfindung lässt sich die Bedienoberfläche auch extern, respektive als Servicedisplay, ausführen. Das Anwendungsgebiet externer Bedienoberflächen erstreckt sich von Diagnoseaufgaben über Serviceroutinen bis hin zu TÜV-Untersuchungen. Dabei wird die Bedieneinheit über eine Schnittstelle mit der Zentralsteuereinheit des Fahrzeugs verbunden. Der Funktionsumfang und das Layout entspricht konsequenterweise dem des im Fahrzeug fest installierten Onboard-Displays.

Zur Kennzeichnung der konfigurierten externen Außentaster können lösbare Kennzeichen dienen, die auf Grund der ggf. ständig wechselnden Funktionen austauschbar sein müssen. Es wird vorgeschlagen, dass Kunststoffschilder, Aufkleber oder Dot-Matrix-Felder Verwendung finden. Vorteilhaft erweisen sich Dot-Matrix-Felder dann, wenn Manipulationen durch Dritte unterbunden werden und sich die Anzeige der Felder im Rahmen der Konfiguration zeitgleich aktualisieren soll. Die Kennzeichnung der Bedienelemente bezieht sich nicht ausschließlich auf eine Beschriftung, sondern lässt sich vorteilhafterweise auch mit Normsymbolen oder Nomogrammen, äquivalent zu denen auf der Bedienoberfläche, realisieren.

Die signifikanten und als neu zu beurteilenden Merkmale und Vorteile der Erfindung sind im Wesentlichen:
■ frei konfigurierbare Außentaster zur Steuerung von fahrzeug- und anbaugerätespezifischer Funktionen, die entweder
   a) die am Fahrzeug befindlichen Aktuatoren aktivieren oder
   b) die Schaltinformation über die erste Schnittstelle, den CAN-BUS, zu anderen am Fahrzeug befindlichen Steuereinheiten übertragen oder
   c) die Schaltinformation, ohne Aktivierung der Aktuatoren, zu den Anbaugeräten über einen ISOBUS übertragen,
■ visuelle Darstellungsmöglichkeit sowie Veränderung und Abspeicherung der Konfiguration aller freien und/oder konfigurierten Außentaster auf dem Onboard-Display und/oder dem externen Diagnose- und Servicedisplay,
■ Kennzeichnungsmöglichkeiten der konfigurierten Außentaster durch Aufkleber, Schilder oder Dot-Matrix Felder mit z.B. Normsymbolen.

Nachstehend wird die Erfindung beispielhaft anhand genannter Zeichnungen näher erläutert.

Dabei zeigen:
- Fig. 1:: Blockschaltbild der Steuerkette,
- Fig. 2:: Display im Anzeigemodus und
- Fig. 3:: Display im Auswahlmodus.

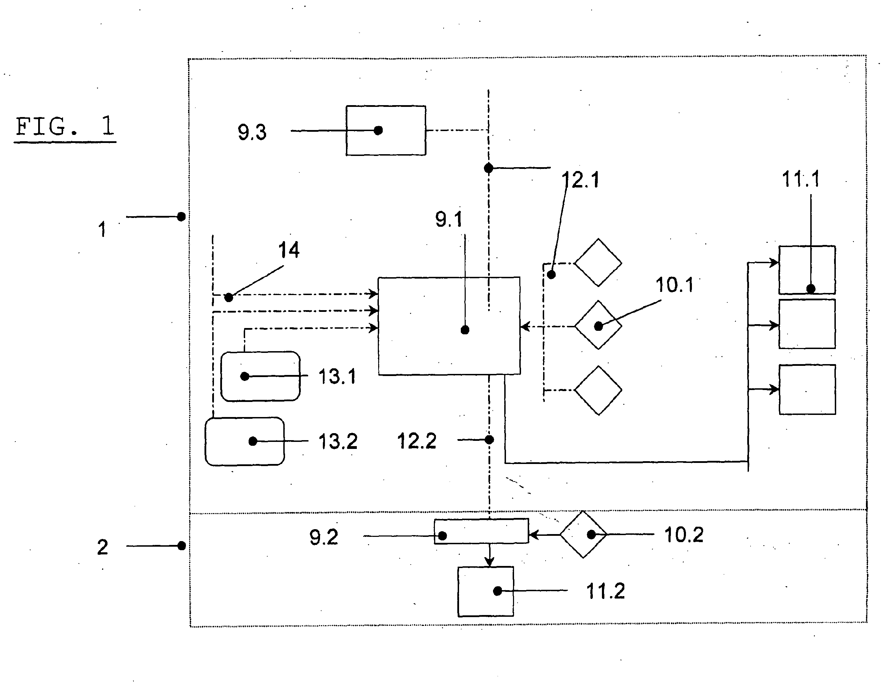

Als Eingangsparameter für die Zentralsteuereinheit 9.1 der in Fig. 1 illustrierten Steuerkette dienen das Signal der geschalteten Tastenfunktion der Außentaster 10 und die Konfigurationsparameter der Außentaster 10. Alle fahrzeuginternen Außentaster 10.1 sind hierbei über den CAN-BUS 12.1 mit der Zentralsteuereinheit 9.1 oder direkt über den ISOBUS 12.2 mit den Steuergeräten des Anbaugerätes verknüpft. Die optional angeordneten Außentaster 10.2 an den Anbaugeräten 2 sind über eine weitere Steuereinheit 9.2, die sich am Anbaugerät 2 befindet, mittels ISOBUS 12.2 mit der Zentralsteuereinheit 9.1 verbunden.

Die am Fahrzeug 1 bzw. Traktor oder Anbaugerät 2 existierenden Steuergeräte 11 werden nach ihrer Position 5 am Fahrzeug 1 klassifiziert und können mittels einer Bedieneinheit 13 konfiguriert, gespeichert und wieder aufgerufen werden. Die Bedieneinheit 13 ist nicht ausschließlich ortsfest im Fahrzeug 1 angeordnet, sondern kann unter Nutzung entsprechender Schnittstellen überall am Fahrzeug 1 ortvariabel angeordnet werden.

In Abhängigkeit der Fahrgeschwindigkeit 14 des Fahrzeugs 1 bzw. des Traktors werden die entsprechenden Steuerroutinen freigegeben. Die Fahrgeschwindigkeit 14 dient damit als weiterer Eingangsparameter für die Zentralsteuereinheit 9.1. Die Zentralsteuereinheit 9.1 gibt in Abhängigkeit der geschalteten Tastenfunktion ein Signal an die Steuergeräte 11. In einer vorteilhaften Ausführung der Erfindung kann neben den regelmäßigen Betriebsfunktionen 6 der Steuergeräte 11, wie z.B. die Bedienung der Zapfwellen vom und hinten, das Heben und Senken des Heck- und Fronthubwerks, zusätzlich auch die Motordrehzahl mittels der frei konfigurierbaren Außentaster 10 realisiert werden.

Über den fahrzeuginternen CAN-BUS 12.1 sind weitere Steuereinheiten 9.3 angeschlossen, die, ausgehend von der Signalverarbeitung in der Zentralsteuereinheit 9.1, für weitere Steuerroutinen genutzt werden. Unabhängig von den am Fahrzeug 1 geschalteten Fahr- oder Betriebsmodi kann mittels der Außentaster 10 nur unterhalb der Sicherheitsgrenze der Fahrgeschwindigkeit 14 von einem km/h eine Betriebsfunktion 6 der Steuergeräte 11 ausgelöst werden.

Erfindungsgemäß wird die externe Betriebsführung mittels der Außentaster 10 visuell und/oder akustisch und/oder taktil durch Dioden, Hupen oder Vibratoren am Terminal der Fahrerkabine oder unmittelbar an den Außentastern 10 signalisiert.

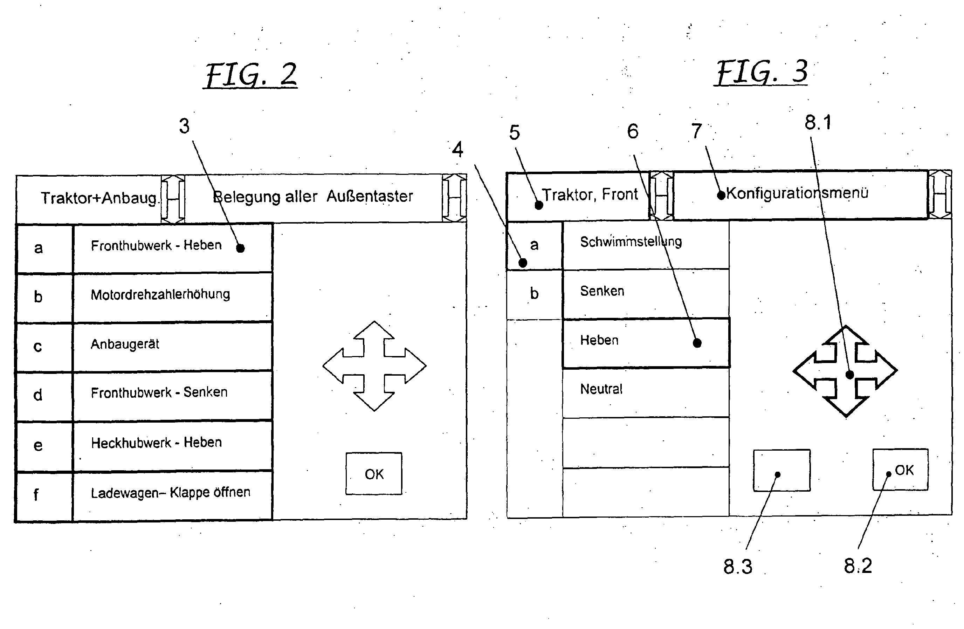

Die Konfiguration der externen Außentaster 10, welche in Fig. 2 dargestellt ist, gestaltet sich durch die menügeführte Bedieneinheit 13 denkbar einfach. Mit der Auswahl der Position 5 der Außentaster 10 am Fahrzeug 1 oder am Anbaugerät 2 werden alle konfigurierbaren Außentaster 10 angezeigt. Sofern das Fahrzeug 1 mit keinem Anbau- oder Zusatzgerät 2 verbunden ist, lässt sich keine Auswahl der Anbaugerätefunktionen realisieren. Es werden folglich nur die verfügbaren Außentaster 10 des Fahrzeugs 1 angezeigt. Mit Hilfe der Navigationstaste 8.1 erfolgt die Auswahl des zu konfigurierenden Außentasters 10, die durch die OK-Taste 8.2 bestätigt werden muss. In Abhängigkeit des tatsächlichen Funktionsumfangs des Steuergerätes 11 erfolgt eine Disposition aller realisierbaren Betriebsfunktionen 6 (Fig. 2), die extern über den gewählten Außentaster 10 vom Bedienpersonal später ausgeführt werden können. Die Navigationstaste 8.1 gestattet ein zügiges Navigieren zur Auswahl der entsprechenden Funktionen. Ein erneutes Drücken der OK-Taste 8.2 bestätigt den Eintrag, wobei die Konfiguration abgespeichert wird. Dieser Eintrag bleibt so lange gespeichert, bis eine aktualisierte Konfiguration erfolgt. Ferner kann eine Außentasterkonfiguration auch softwareseitig über die Laden-Taste 8.3 geladen werden. Dabei werden alle bereits gespeicherten Außentaster-Konfigurationen angezeigt, die anschließend menügeführt für die jeweilige Anwendung aktiviert werden können. Sinngemäß erfolgt die Konfiguration aller weiteren benötigten Außentaster 10.

Im Anzeigemodus, welcher in Fig. 1 dargestellt ist, werden alle konfigurierten Außentaster 10 in einer übersichtlichen Disposition 3, in Abhängigkeit der gewählten Position 5 der Außentaster 10 am Fahrzeug 1 oder Anbaugerät 2, angezeigt. Die Kennzeichnung 4 (a, b,...,x) der Außentaster 10 ist statisch, d.h. eine Zuordnung ist den Herstellerunterlagen zu entnehmen und ist darüber hinaus nicht veränderbar. Unbelegte Außentaster 10 werden mit einem Leereintrag dargestellt. Im vorliegenden Ausführungsbeispiel sind alle am Fahrzeug verfügbaren Außentaster 10 belegt.

### Liste der Bezugszeichen

- 1: Fahrzeug
- 2: Anbaugerät
- 3: Übersicht über die Belegung aller Außentaster
- 4: Kennzeichnung der Außentaster
- 5: Position der Außentaster am Fahrzeug oder Anbaugerät
- 6: zugewiesene Betriebsfunktion für den gewählten Außentaster
- 7: Anzeige des Bildschirmmodus
- 8: Tasten
8.1 Navigationstaste
8.2 OK-Taste
8.3 Laden-Taste
- 9: Steuereinheiten/ Elektronik
9.1 Zentralsteuereinheit
9.2 Steuereinheit des Anbaugerätes
9.3 Steuereinheit des Anbaugerätes
- 10: Außentaster
10.1 Außentaster des Fahrzeugs
10.2 Außentaster des Anbaugerätes
- 11: Steuergeräte
11.1 Steuergeräte des Fahrzeugs
11.2 Steuergeräte des Anbaugerätes
- 12: BUS-Leitungen
12.1 CAN-BUS
12.2 ISOBUS
- 13: Bedieneinheiten
13.1 fahrzeuginterne Bedieneinheit, Onboard-Bedieneinheit
13.2 fahrzeugexterne Bedieneinheit
- 14: Signal Fahrzeuggeschwindigkeit

## Patentansprüche

1. Äußentaster (10) für landwirtschaftliche und/oder kommunale Nutzfahrzeuge (1) und/oder Anbaugeräte (2), mit einer in dem Nutzfahrzeug angeordneten und durch eine Applikationssoftware betreibbaren Steuereinheit (9), die mit mindestens einer Bedieneinheit (13) und Steuergeräten (11) über einen BUS (12) verbunden ist, wobei der Außentaster (10) zur externen Steuerung eines Betriebszustandes und/oder einer Betriebsfunktion (6) eines Steuergerätes (11) des Nutzfahrzeuges (1) und/oder dessen Anbaugerätes (2) betreibbar ist,
**dadurch gekennzeichnet, dass** der Außentaster (10) mit der Steuereinheit (9) und mit der Bedieneinheit (13) über den BUS (12) verbunden ist, dass die Funktion des mindestens einen Außentasters (10) in der durch die Applikationssoftware betreibbaren Steuereinheit (9) mit Hilfe der Bedieneinheit (13) frei konfigurierbar ist, derart, dass bei Betätigung des Außentasters (10) die Betriebsfunktion (6) der Nutzfahrzeuge (1)
a) durch Aktivierung der am Fahrzeug (1) befindlichen Aktuatoren oder
b) die Übertragung der Schaltinformation des Außentasters (10) über den fahrzeuginternen CAN-BUS (12.1) zu anderen am Fahrzeug (1) befindlichen Steuereinheiten (9.3) oder
c) durch die Übertragung der Schaltinformation des Außentasters (10), ohne Aktivierung der Aktuatoren, zu den Anbaugeräten (2) über einen ISOBUS (12.2)
steuerbar ist.

2. Außentaster nach Anspruch 1, **dadurch gekennzeichnet, dass** die Bedieneinheit (13) ein menügeführtes Display einschließt, das die Konfiguration und den Status der konfigurierten Außentaster (10) in verschiedenen Bildschirmmodi (7) anzeigt und zur Konfiguration der Funktion des Außentasters betreibbar ist.

3. Außentaster nach einem der Ansprüche 1 bis 2, **dadurch gekennzeichnet, dass** eine fahrzeugexteme Bedieneinheit (13.2) für Diagnose- und Servicearbeiten, insbesondere auch für die Konfiguration des Außentasters, vorgesehen ist.

4. Außentaster nach einem der Ansprüche 1 bis 3, **dadurch gekennzeichnet, dass** zur digitalen Kommunikation zur externen Steuerung von Steuergeräten (11) eines Nutzfahrzeugs (1), insbesondere von Steuergeräten eines Traktors, ein fahrzeugintemer CAN-BUS (12.1) vorgesehen ist, der mit entsprechenden Schnittstellen am Fahrzeug (1) verbunden ist.

5. Außentaster nach einem der Ansprüche 1 bis 4, **dadurch gekennzeichnet, dass** zur digitalen Kommunikation mit externen Steuergeräten (11) eines Anbaugerätes (2) ein ISOBUS (2.2) vorgesehen ist, der mit entsprechenden Schnittstellen am Fahrzeug (1) verbunden ist.

6. Außentaster nach einem der Ansprüche 1 bis 5, **dadurch gekennzeichnet, dass** die Applikationssoftware eine Kommunikation zwischen dem Außentaster (10) des Anbaugerätes (2) und/oder dem Fahrzeug (1) und den Steuereinheiten (9) herstellerunabhängig auf der Basis einer gemeinsamen Kommunikationsschnittstelle veranlasst.

7. Außentaster nach einem der Ansprüche 1 bis 6, **dadurch gekennzeichnet, dass** er als Taster, Schalter oder Wippe ausgebildet ist.

8. Außentaster nach einem der Ansprüche 1 bis 7, **dadurch gekennzeichnet, dass** der Außentaster selbst eine der zugeordneten frei konfigurierten Betriebsfunktion (6) entsprechende Kennzeichnung aufweist oder dass in unmittelbarer Sichtweite des den Außentaster bedienenden Bedienpersonals die Betriebsfunktion durch Kunststoffschilder, Aufkleber oder Dot-Matrix-Felder darstellbar ist.

9. Außentaster nach Anspruch 8, **dadurch gekennzeichnet, dass** die Kennzeichnung durch Symbole, Nomogramme oder Beschriftungen gebildet ist.

10. Außentaster nach einem der Ansprüche 1 bis 9, **dadurch gekennzeichnet, dass** die Bedienung der Außentaster (10) nur innerhalb zulässiger Sicherheitsgrenzen in Abhängigkeit der Fahrzeuggeschwindigkeit (14) oder anderer geeigneter Führungsgrößen freigegeben ist.

11. Außentaster nach einem der Ansprüche 1 bis 10, **dadurch gekennzeichnet, dass** Steuergeräte (11.1) des Fahrzeugs (1) durch die am Anbaugerät (2) positionierten Außentaster (10.2) bedienbar sind.

12. Außentaster nach einem der Ansprüche 1 bis 11, **dadurch gekennzeichnet, dass** die zulässige Konfiguration der Außentaster (10) in Abhängigkeit der Position des Steuergerätes (11) am Fahrzeug (1) und/oder Anbaugerät (2) erfolgt, und dass durch einen Außentaster (10) jeweils nur Steuergeräte (11) in Sichtweite des den Außentaster (10) betätigenden Bedienpersonals steuerbar sind.

## Claims

1. External button (10) for agricultural and/or municipal utility vehicles (1) and/or attachments (2) with an internal application software operated control computer (9), which is connected to at least one server (13) and control devices (11) via a BUS (12), whereby the external button (10) is used for the external control of an operating mode and/or a control function (6) of a control device (11) of the utility vehicle (1) or its attachments (2),
**characterized in that** the external button (10) is connected to the control computer (9) and the server (13) via the BUS (12), that the function of the at least one external button (10) is freely configurable in the application software operated control computer (9) by means of the server (13) so that upon activation of the external button (10) the control function (6) of the utility vehicles (1) can be controlled
a) by activating the actuators located on the vehicle (1) or
b) by transmitting the switching information of the external button (10) to other control computers located on the vehicle (1) via the integrated CAN-BUS (12.1) or
c) by transmitting the switching information of the external button (10), without activating the actuator, to the attachments (2) via an ISOBUS (12.2).

2. External button according to claim 1 **characterized in that** the server (13) features a menu- based display, that displays the configuration and status of the configured external buttons (10) in different screen modes (7) and can be used to configure the function of the external button.

3. External button according to any of the claims 1 to 2, **characterized in that** an internal server (13.2) for diagnostic and maintenance tasks is provided, in particular for the configuration of the external button.

4. External button according to any of the claims 1 to 3, **characterized in that** for the digital communication with the external control of the control devices (11) of a utility vehicle (1), especially for control devices of a tractor, an internal CAN- BUS (12.1) is provided and connected to the corresponding interfaces on the vehicle (1).

5. External button according to any of the claims 1 to 4, **characterized in that** for the digital communication with external control devices (11) of an attachment (2) an ISOBUS (2.2) is provided and connected to the corresponding interfaces on the vehicle (1).

6. External button according to any of the claims 1 to 5, **characterized in that** the application software facilitates communication between the external button (10) of the attachment (2) and/or vehicle (1) and the control computers (9) manufacture-independently based on a common communication interface.

7. External button according to any of the claims 1 to 6, **characterized in that** it is designed as button, switch, or rocker switch.

8. External button according to any of the claims 1 to 7, **characterized in that** the external button itself is labeled with the assigned freely configured control function (6) or that in immediate visual range of the operator operating the external button the function can be displayed by means of plastic signs, adhesives or dot matrix fields.

9. External button according to claim 8, **characterized in that** symbols, nomograms or text labels are used for marking the function of the external buttons (10).

10. External button according to any of the claims 1 to 9, **characterized in that** the operation of the external buttons (10) is enabled only within admissible safety limits depending on the vehicle speed (14) or other suitable reference variables.

11. External button according to any of the claims 1 to 10, **characterized in that** control devices (11.1) of the vehicle (1) can be operated via the external buttons (10.2) located on the attachment (2).

12. External button according to any of the claims 1 to 11, **characterized in that that** the external buttons (10) are configured depending on the position of the control device (11) on the vehicle (1) and/ or attachment (2), and that an external button (10) controls only control devices (11) in the visual range of the operator operating the external button (10).

## Revendications

1. Bouton-poussoir extérieur (10) pour véhicules utilitaires (1) agricoles et/ou communaux et/ou outils portés (2), avec une unité de manoeuvre (9) disposée dans le véhicule utilitaire et actionnable par un logiciel d'application, qui est relié avec au moins une unité de commande (13) et des organes de manoeuvre (11) par l'intermédiaire d'un BUS (12), le bouton-poussoir extérieur (10) étant actionnable pour la manoeuvre extérieure d'un état de service et/ou d'une fonction de service (6) d'un organe de manoeuvre (11) du véhicule utilitaire (1) et/ou de son outil porté (2),
**caractérisé en ce que** le bouton- poussoir extérieur (10) est relié avec l'unité de manoeuvre (9) et avec l'unité de commande (13) par l'intermédiaire du BUS (12), que la fonction d'au moins un bouton-poussoir extérieur (10) est librement configurable dans l'unité de manoeuvre (9) actionnable par le logiciel d'application avec l'aide de l'unité de commande (13), de manière, à ce que, lors de l'actionnement du bouton- poussoir extérieur (10), la fonction de service (6) des véhicules utilitaires (1) soit manoeuvrable
a) par l'activation des actionneurs présents sur le véhicule (1) ou
b) la transmission de l'information de commutation du bouton-poussoir extérieur (10) par l'intermédiaire du CAN- BUS (12.1) interne au véhicule à d'autres unités de manoeuvre (9.3) présentes sur le véhicule (1) ou
c) par la transmission de l'information de commutation du bouton-poussoir extérieur (10), sans activation des actionneurs, aux outils portés (2) par l'intermédiaire d'un ISOBUS (12.2).

2. Bouton-poussoir extérieur suivant la revendication 1, **caractérisé en ce que** l'unité de commande (13) comprend un affichage piloté par menu, qui affiche la configuration et l'état des boutons-poussoirs extérieurs (10) configurés dans différents modes d'écran (7) et est actionnable pour la configuration de la fonction du bouton-poussoir extérieur.

3. Bouton-poussoir extérieur suivant l'une quelconque des revendications 1 à 2, **caractérisé en ce qu'**une unité de commande (13.2) extérieure au véhicule pour des opérations de diagnostic et de service, en particulier aussi pour la configuration du bouton-poussoir extérieur, est prévue.

4. Bouton-poussoir extérieur suivant l'une quelconque des revendications 1 à 3, **caractérisé en ce que** pour la communication numérique avec la manoeuvre extérieure d'organes de manoeuvre (11) d'un véhicule utilitaire (1), en particulier d'organes de manoeuvre d'un tracteur, un CAN- BUS (12.1) interne au véhicule est prévu, lequel est relié avec des interfaces correspondantes sur le véhicule (1).

5. Bouton-poussoir extérieur suivant l'une quelconque des revendications 1 à 4, **caractérisé en ce que** pour la communication numérique avec des organes de manoeuvre extérieurs (11) d'un outil porté (2) un ISOBUS (2.2) est prévu, lequel est relié avec des interfaces correspondantes sur le véhicule (1).

6. Bouton-poussoir extérieur suivant l'une quelconque des revendications 1 à 5, **caractérisé en ce que** le logiciel d'application autorise une communication entre le bouton-poussoir extérieur (10) de l'outil porté (2) et/ou le véhicule (1) et les unités de manoeuvre (9) indépendamment du constructeur sur la base d'une interface de communication commune.

7. Bouton-poussoir extérieur suivant l'une quelconque des revendications 1 à 6, **caractérisé en ce qu'**il a la forme d'un bouton-poussoir, d'un commutateur ou d'une bascule.

8. Bouton-poussoir extérieur suivant l'une quelconque des revendications 1 à 7, **caractérisé en ce que** le bouton-poussoir extérieur présente même une caractérisation correspondant à la fonction de service (6) librement configurable coordonnée ou qu'à portée optique immédiate du personnel utilisant le bouton-poussoir extérieur, la fonction de service est représentable par des panneaux en plastique, des autocollants ou des champs à matrice de points.

9. Bouton-poussoir extérieur suivant la revendication 8, **caractérisé en ce que** l'identification est illustrée par des symboles, des nomogrammes ou des textes.

10. Bouton-poussoir extérieur suivant l'une quelconque des revendications 1 à 9, **caractérisé en ce que** la commande du bouton-poussoir extérieur (10) est uniquement autorisée à l'intérieur de limites de sécurité admissibles en fonction de la vitesse du véhicule (14) ou d'autres grandeurs directrices appropriées.

11. Bouton-poussoir extérieur suivant l'une quelconque des revendications 1 à 10, **caractérisé en ce que** les organes de manoeuvre (11.1) du véhicule (1) sont commandables par les boutons- poussoirs extérieurs (10.2) positionnés sur l'outil porté (2).

12. Bouton-poussoir extérieur suivant l'une quelconque des revendications 1 à 11, **caractérisé en ce que** la configuration admissible des boutons- poussoirs extérieurs (10) a lieu en fonction de la position de l'organe de manoeuvre (11) sur le véhicule (1) et/ou l'outil porté (2) et que seuls des organes de manoeuvre (11) soient manoeuvrables à l'aide d'un bouton-poussoir extérieur (10) à portée optique du personnel de conduite qui actionne le bouton-poussoir extérieur (10).
